# EUROPEAN PATENT SPECIFICATION

(11) **EP 3 915 096 B1**
(45) Date of publication and mention of the grant of the patent: **25.03.2026**
(21) Application number: 19821146.8
(22) Date of filing: 13.11.2019
(51) Int. Cl.: G07C 9/00

(54) **VEHICLE ACCESS DEVICE, SYSTEM AND METHOD**
ZUGANGSSYSTEM FÜR FAHRZEUG UND VERFAHREN
DISPOSITIF, SYSTÈME ET PROCÉDÉ D'ACCÈS À UN VÉHICULE

(30) Priority: 13.11.2018 GB 201818519
(43) Date of publication of application: 01.12.2021
(73) Proprietor: Vigil Helmets Ltd, London N14 6JS (GB)
(72) Inventor: WOOLF OBE, Jeffrey Moss, London NW3 5AS (GB)
(74) Representative: Bottomley, David John
(86) International application number: PCT/GB2019/000158
(87) International publication number: WO 2020/099815

(56) References cited:
- WO-A1-2019/217187
- CN-A- 107 767 500
- DE-A1- 19 934 188
- TW-A- 201 012 684
- US-A- 6 003 156
- US-A1- 2018 037 194
- US-B1- 7 973 652

## Description

### FIELD OF INVENTION

The invention relates to devices, systems and methods for accessing vehicles such as, for example, cycles, motor cycles and scooters for which the rider/user may choose, is recommended and/or is obliged by law to wear wearable safety items.

### BACKGROUND

The wearing of safety clothing, such as, for example, a helmet, is either obligatory or at least strongly advised when using/riding vehicles such as, for example, cycles, motor cycles and scooters. Sharing schemes are known in which a vehicle is accessed for use for a period of time using an App loaded on a user's mobile device such as a smartphone. By way of example, a sharing scheme for electric scooters may involve the use of such an App. Once a scooter has been located, it is unlocked for use by way of the App and the unlocked scooter is activated by the user/rider initially pushing the scooter along the ground for a short distance. At the end of the journey when the user no longer requires the scooter, it is parked and locked again using the App on the user's mobile device.

As the popularity of sharing schemes continues to grow and a greater number of people use these schemes, it is statistically inevitable that a greater number of user's will have accidents such as, for example, falling off the vehicle or collisions with other vehicles. Such accidents may range from minor injuries to fatalities.

As well as being potentially life-changing for the users, an increase in accidents associated with sharing schemes is detrimental to the sharing scheme industry and service providers. Moreover, in some legal jurisdictions, sharing scheme companies could be considered to be liable for injury or fatality of a user using their vehicle if the sharing scheme company has not made reasonable effort to ensure the safety of their customers.

Additionally, users of vehicle sharing services seek a relatively quick and seamless transaction when picking up a vehicle so that they can continue with their journey as soon as possible.

It is therefore desirable in the industry for there to be a method which promotes and encourages safety of users when accessing and using vehicles such as, for example, cycles, motor cycles and scooters.

It is also desirable in the industry and for users for vehicle pick ups to be a relatively quick and efficient transaction when a user seeks to use a vehicle sharing service for a journey. Document US 7973652B1 discloses a method of accessing or unlocking a vehicle according to the state of the art.

### SUMMARY

According to the present invention, there is provided a method of accessing or unlocking a vehicle for use according to independent claim 1.

The transmission of the identification code from the wearable identification device may be to the said vehicle and occurs when the wearable identification device is brought into close proximity or contact with said vehicle.

The wearable identification device preferably comprises an RFID device.

The RFID device is preferably a passive device.

The wearable identification device preferably comprises a scannable code.

Preferably, the wearable identification device is deactivated by folding the foldable helmet.

The present invention may be associated with a computing system implementing a vehicle sharing system, the computing system comprising:
a network communication interface for communicating, over one or more networks, with a wearable identification device associated with a user of the vehicle sharing system; one or more vehicles in communication with the one or more networks, one or more processors; and one or more memory resources storing instructions that, when executed by one or more of the processors, cause the computing system to:
receive a wearable device identification code from the wearable identification device associated with the user; validate the received wearable device identification code;
whereby the validated wearable device identification code causes the vehicle to be accessible or unlocked for use.

The network communication interface is advantageously operable to communicate, over the one or more networks, with wearable identification devices using a user application executing on mobile communication devices of users.

### DESCRIPTION

Embodiments of the invention will now be described by way of example, and with reference to the following drawings, in which:
Figure 1 is a schematic diagram illustrating a first embodiment of a method according according to the present invention;
Figure 2 is a schematic diagram illustrating a second embodiment of a method according to the present invention; and
Figure 3 is a drawing of the top view of a vehicle access/unlocking helmet of use in a method of the present invention.

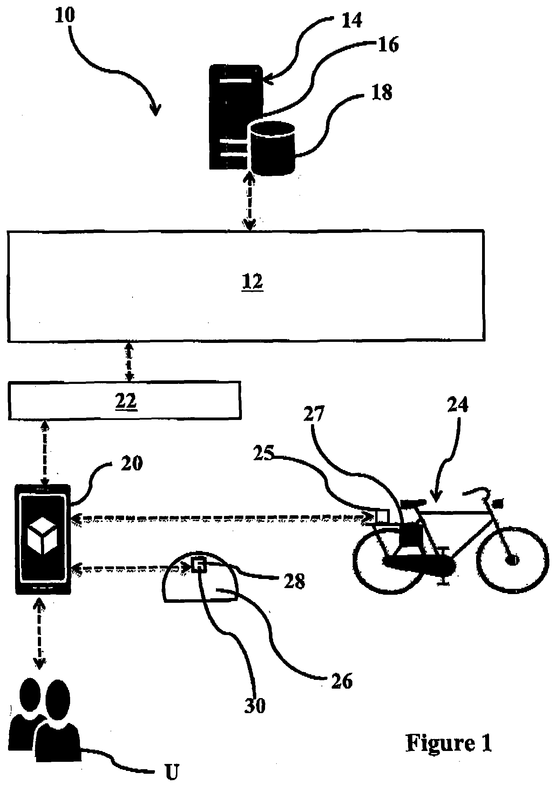

Referring to Figure 1, a computing system 10 implementing a vehicle sharing service comprises a communication network 12 in communication with a computer server 14 having a processor 16 and memory resources 18. A user application is executable on a user mobile communication device 20 (e.g. smartphone) through a network communication interface 22.

As with known bicycle sharing services, each vehicle 24 may have a vehicle code 25 associated with it, such as, for example, a QR Code. Each vehicle 24 also has a lock 27. The vehicle 24 may also have a GPS location device, a power supply and a power generator such as, for example, a hub dynamo. The GPS location device, power supply and power generator are all known components on vehicles of existing vehicle sharing systems.

A vehicle 24 may also be in communication with the communication network 12 and/or a GPS network and the computer server 14, as with known bicycle sharing services.

The computer server 14, of the vehicle sharing service provider, records the location of the vehicles using the GPS location device.

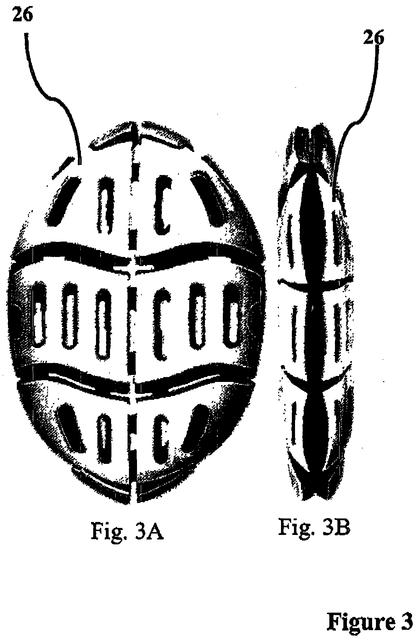

Referring also to Figure 3, according to the invention a vehicle access/unlocking wearable item is a helmet 26 and comprises wearable identification device 28 having a identification code 30. The identification code 30 is associated with a specific shared vehicle service user account.

As specifically shown in Figure 3, the helmet 26 is a foldable helmet for storage and ease of transport when it is not needed. The identification code 30 may be disabled when the helmet is in a folded state (Fig 3B) and is enabled when the helmet is unfolded and ready for use (Fig. 3A) according to the invention.

The identification device 28 is an RFID device which is preferably a passive device. Alternatively, the identification device 28 may be a scannable identification code such as, for example, a QR Code or barcode.

Referring to Figure 1, in use, a service user U opens the user application on their mobile communication device 20 and communicates with the computer server 14 through the network communication interface 22 to locate a suitable vehicle 24 on a map. Upon arriving at the location of the suitable vehicle 24, the user U inputs the vehicle code 25 into the user application, preferably by scanning the vehicle code 25 (e.g. QR Code) disposed on the vehicle 24. The user application sends the vehicle code 25 from the mobile communication device 20 through the network communication interface 22 to the computer server 14, via the communication network 12.

The vehicle sharing service provider receives the vehicle code 25 and user identification information (e.g. the user's mobile phone number) and compares the vehicle code 25 and user identification information with the information stored on the computer server 14 to ensure authenticity.

According to the present invention, the user U is also required to provide an identification code 30. Electronic transmission of the identification code 30 is required in order for the Vehicle Sharing Service Provider to authenticate use of a suitable helmet 32. The identification code 30 may authenticate that the helmet 32 to be used is registered to the user U on the computer server 14 and that it is suitable for use with the vehicle 24 which the user U wishes to use.

The identification code 30 is transmitted from the helmet 26 to the mobile communication device 20 and the user application (on the user's mobile communication device 20) requests wearable identification device 28 authentication from the Vehicle Sharing Service Provider. Upon being prompted, the user U may then transmit the identification code 30 from the identification device 28 to the mobile communication device 20.

For older mobile communication devices, which do not have NFC connectivity, the identification code 30 may transmitted from the RFID device to the mobile communication device 20 using an alternative short range communication, such as, for example, Bluetooth.

In an alternative embodiment, the electronically readable identification code 30 may be stored as a QR Code or a barcode, which may be scanned using the mobile communication device 20.

The user application sends the identification code 30 from the mobile communication device 20 through the network communication interface 22 to the computer server 14, via the communication network 12.

The vehicle sharing service provider receives the identification code 30 and compares the identification code 30 and user identification information with the information stored on the computer server 14 to ensure authenticity of the registered wearable identification device 28 and the User U.

Upon confirmation of authenticity of the user U, the vehicle code 25 and the helmet identification code 30, the vehicle sharing service provider generates and sends an unlock authentication code from the computer server 14 through the communication network 12 and the network communication interface 22 to the user application on the mobile communication device 20, of the user U.

Upon receipt of the unlock authentication code, the user application either displays a visible unlock code or a visible unlock soft key on the screen of the mobile communication device 20. The generated unlock authentication code matches an unlock code associated with vehicle code 25 of the selected vehicle 24.

Tapping the unlock soft key on the screen of the mobile communication device 20, enables the User U to send the unlock authentication code to the lock 27. If the unlock authentication code matches the unlock code associated with the lock 27, then the lock 27 is deactivated to allow the vehicle 24 to be unlocked and used by the user U with the registered helmet 30.

Therefore, the method, according to the invention, ensures that the user U is a registered user and, if required by the Vehicle Sharing Service provider, has a suitable helmet 26 (or other safety item(s)) at the time of transacting with the Vehicle Sharing Service Provider to use the selected vehicle 24.

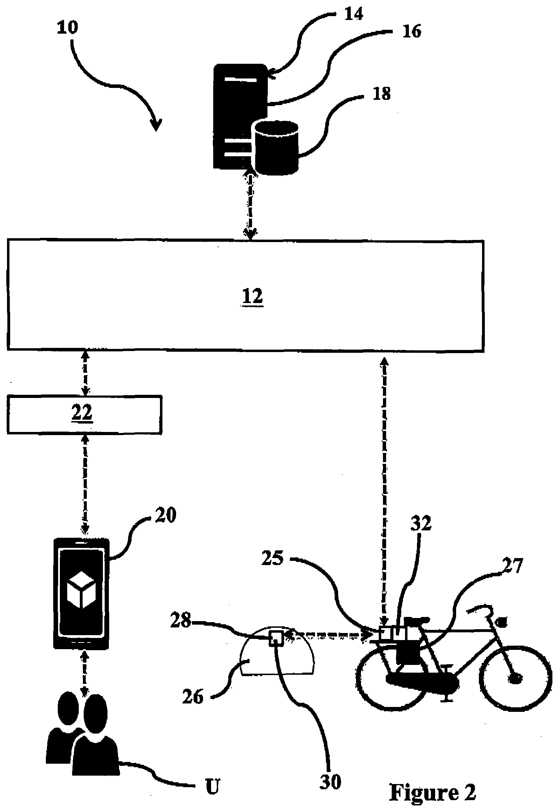

Referring to Figure 2, the vehicle 24 or a vehicle docking station (not shown) to which a vehicle 24 is locked, may have electronic reading means 32 for electronically reading the identification code 30 directly from the wearable identification device 28 (e.g. on the helmet 26). The electronic reading means may be for example, an RFID Reader for reading the code from an RFID device disposed on the helmet 26 or an optical code scanner for reading a QR or barcode disposed on the helmet 26.

The vehicle 24 or docking station (not shown) may also be connected to the computer server 14 through the communication network 12. In such embodiments, the wearable identification device 28, and/or use of suitable safety equipment such as the suitable helmet 26 may be authenticated by bringing the identification device 28 (or helmet 26) into the proximity of, or in contact with, the electronic reading means 32 - for example, an RFID reader using NFC to transmit the identification code 30 from the wearable identification device 28 directly to the vehicle 24 or docking station (not shown). The identification code 30 is then either authorized by the vehicle or docking station and the vehicle 24 is unlocked for use, or the identification code 30 is transmitted to the computer server 14 from the vehicle 24 or the docking station through the communication network 12 and an unlock authentication code generated for unlocking the vehicle 24 in a similar manner to that described above with reference to communication between the mobile communication device and the computer server.

Upon matching of the generated authentication code and the unlock code associated with the vehicle code, the lock 27 disables such that the Vehicle is available for use by the User U with the registered wearable identification device 28 which may be disposed in or on, for example, helmet 26.

For both embodiments, the vehicle 24 is tracked using GPS as the User U uses the vehicle for duration of their journey.

Upon termination of their journey, the User U terminates use of the vehicle by locking the vehicle 24 either manually or by using the user application on their mobile communication device 20. Termination of use of the vehicle is transmitted to the computer server 14 and the lock 27 is enabled such that the vehicle cannot be used. The position of the vehicle 24 is recorded and the status of the vehicle is updated to available on the map of the user application.

In addition to authenticating the wearable identification device 28 to facilitate grant of access and/or unlocking of a vehicle 24 or to authenticate the use of wearable safety items, such as, for example, a helmet 26, the present invention may also authenticate the wearable identification device 28 to determine a suitable vehicle for the user U or restrict or increase the performance of a vehicle 24. For example, if authentication of the identification device 28 determines a poor user riding/driving history, the Vehicle Sharing Service Provider may restrict the type or speed of vehicle available to the User U. Alternatively, if appropriate, if the User U has a good user-history and is wearing safety items, such as helmet 26, the Vehicle Sharing Service Provider may remove speed restrictions or allow the User U to use a higher performance vehicle.

Referring to Figure 3, the helmet 26 is a foldable helmet which is transformable between a usable unfolded state, as shown in Figure 3A, and a storable folded state, as shown in Figure 3B.

In another embodiment, in a folded state the electronic identification device 28 may be deactivated such that the helmet identification code 30 is not readable, wherein unfolding the helmet into a useable state for wearing on the head of a user enables use of the electronic identification device 34 enabling the helmet identification code 30 to be readable according to the invention.

It will also be appreciated that although the invention has been described and illustrated with respect to bicycle sharing, the invention may be applied to other vehicle sharing services.

## Claims

1. A method of accessing or unlocking a vehicle (24) for use, the method comprising:
providing a wearable identification device (28); the wearable identification device having a wearable device identification code (30);
transmitting the wearable device identification code from the wearable identification device to said vehicle or to a vehicle docking station through a mobile communication device (20);
whereby upon receipt of the identification code by said docking station or said vehicle, said identification code causes said vehicle to be accessible or unlocked for use;
wherein the wearable identification device is disposed on a foldable helmet (26) and is activated by unfolding the foldable helmet.

2. A method as claimed in claim 1, whereby transmitting the identification code from the wearable identification device is to the said vehicle and occurs when the wearable identification device is brought into close proximity or contact with said vehicle.

3. A method as claimed in claim 1 or claim 2, whereby the wearable identification device comprises an RFID device.

4. A method as claimed in claim 3, wherein the RFID device is a passive device.

5. A method as claimed in any of the preceding claims, wherein the wearable identification device comprises a scannable code.

6. A method as claimed in any of the preceding claims, wherein the wearable identification device is deactivated by folding the foldable helmet.

## Patentansprüche

1. Verfahren zum Zugang zu einem Fahrzeug (24) oder zum Entsperren dessen zur Verwendung, wobei das Verfahren Folgendes umfasst:
Bereitstellen einer tragbaren Identifikationsvorrichtung (28);
wobei die tragbare Identifikationsvorrichtung einen Identifikationscode für tragbare Vorrichtungen (30) aufweist;
Übertragen des Identifikationscodes für tragbare Vorrichtungen von der tragbaren Identifikationsvorrichtung über eine mobile Kommunikationsvorrichtung (20) an das Fahrzeug oder an eine Fahrzeugdockingstation;
wobei nach Empfang des Identifikationscodes durch die Dockingstation oder das Fahrzeug der Identifikationscode bewirkt, dass das Fahrzeug für die Verwendung zugänglich oder entsperrt ist;
wobei die tragbare Identifikationsvorrichtung an einem faltbaren Helm (26) angeordnet ist und durch Entfalten des faltbaren Helms aktiviert wird.

2. Verfahren nach Anspruch 1, wobei die Übertragung des Identifikationscodes von der tragbaren Identifikationsvorrichtung an das Fahrzeug erfolgt und stattfindet, wenn die tragbare Identifikationsvorrichtung in unmittelbare Nähe des Fahrzeugs oder in Kontakt damit gebracht wird.

3. Verfahren nach Anspruch 1 oder Anspruch 2, wobei die tragbare Identifikationsvorrichtung eine RFID-Vorrichtung umfasst.

4. Verfahren nach Anspruch 3, wobei die RFID-Vorrichtung eine passive Vorrichtung ist.

5. Verfahren nach einem der vorhergehenden Ansprüche, wobei die tragbare Identifikationsvorrichtung einen scanbaren Code umfasst.

6. Verfahren nach einem der vorhergehenden Ansprüche, wobei die tragbare Identifikationsvorrichtung durch Falten des faltbaren Helms deaktiviert wird.

## Revendications

1. Procédé d'accès ou de déverrouillage d'un véhicule (24) pour utilisation, le procédé comprenant :
la fourniture d'un dispositif d'identification portable (28), le dispositif d'identification portable ayant un code d'identification de dispositif portable (30) ;
la transmission du code d'identification de dispositif portable depuis le dispositif d'identification portable vers ledit véhicule ou vers une station d'accueil de véhicule via un dispositif de communication mobile (20) ;
par lequel, dès réception du code d'identification par ladite station d'accueil ou ledit véhicule, ledit code d'identification rend ledit véhicule accessible ou déverrouillé pour utilisation ;
dans lequel le dispositif d'identification portable est disposé sur un casque pliable (26) et est activé en dépliant le casque pliable.

2. Procédé selon la revendication 1, dans lequel la transmission du code d'identification du dispositif d'identification portable au véhicule a lieu lorsque le dispositif d'identification portable est mis à proximité ou en contact avec le véhicule.

3. Procédé selon la revendication 1 ou la revendication 2, dans lequel le dispositif d'identification portable comprend un dispositif RFID.

4. Procédé selon la revendication 3, dans lequel le dispositif RFID est un dispositif passif.

5. Procédé selon l'une quelconque des revendications précédentes, dans lequel le dispositif d'identification portable comprend un code scannable.

6. Procédé selon l'une quelconque des revendications précédentes, dans lequel le dispositif d'identification portable est désactivé en pliant le casque pliable.
